(19) Europäisches Patentamt
European Patent Office
Office européen des brevets

(11) Publication number: **0 031 168**
**A2**

(12) # EUROPEAN PATENT APPLICATION

(21) Application number: 80108171.2

(22) Date of filing: 23.12.80

(51) Int. Cl.³: C 08 F 210/16
C 08 F 4/62

(30) Priority: 25.12.79 JP 170054/79

(43) Date of publication of application: 01.07.81 Bulletin 81/26

(84) Designated Contracting States: BE DE FR IT NL

(71) Applicant: SUMITOMO CHEMICAL COMPANY, LIMITED
15 Kitahama 5-chome Higashi-ku
Osaka-shi Osaka-fu(JP)

(72) Inventor: Mashita, Kentaro
31-4, Oike-2-chome
Ibaraki-shi(JP)

(72) Inventor: Araki, Masashi
1353-4, Shiizu
Ichihara-shi(JP)

(74) Representative: Vossius.Vossius.Tauchner.Heunemann.Rauh
Siebertstrasse 4 P.O. Box 86 07 67
D-8000 München 86(DE)

(54) **Process for copolymerizing ethylene with n-butene-1.**

(57) A process for copolymerizing ethylene with n-butene-1 with a catalyst comprising (A) a transition metal compound component supported on a solid carrier and (B) an organometallic compound component of a metal of Groups I to III of the periodic table is described which comprises selectively hydrogenating a mixed $C_4$ fraction containing 10% by weight or more of n-butene-1 which remains after the extraction of 1,3-butadiene from a $C_4$ fraction of cracked hydrocarbons so that the resulting hydrogenated fraction contains 200 ppm by volume or less of 1,3-butadiene and n-butene-1 in an amount of at least 80% based on the amount of n-butene-1 contained in the mixed $C_4$ fraction, using this hydrogenated fraction as the source of n-butene-1 in the copolymerization, and using as said organometallic compound component a non-acidic or low-acidic organometallic compound.

EP 0 031 168 A2

Croydon Printing Company Ltd.

VOSSIUS · VOSSIUS · TAUCHNER · HEUNEMANN · RAUH
PATENTANWÄLTE

SIEBERTSTRASSE 4 · 8000 MÜNCHEN 86 · PHONE: (089) 474075
CABLE: BENZOLPATENT MÜNCHEN · TELEX 5-29 453 VOPAT D

Our Ref.: P 943 EP
Case: A5164-03
SUMITOMO CHEMICAL COMPANY, LIMITED
OSAKA, JAPAN

PROCESS FOR COPOLYMERIZING ETHYLENE WITH N-BUTENE-1

This invention relates to a process for producing a copolymer having a density of 0.910 to 0.960 from ethylene and n-butene-1 by using a catalyst of enhanced activity derived from a supported transition metal compound component on a solid carrier and an organometallic compound component.

It has heretofore been known that a low-medium-, or high-density ethylene copolymer is prepared by copolymerizing ethylene with n-butene-1. Among the methods for the production of n-butene-1, there is a method in which a $C_4$ hydrocarbon mixture (hereinafter referred to as "spent BB fraction") obtained by removing 1,3-butadiene from a $C_4$ fraction of the naphtha cracking products by extraction or other means is further subjected to removal of isobutylene and then purified by distillation. The n-butene-1 produced by such a method, however, has a disadvantage of high production cost. Therefore, if it is possible to use the mixed $C_4$ fraction, which is obtained after the extraction of 1,3-butadiene, etc., and is available at low cost, as a starting material for the copolymerization after simple treatment without separating pure n-butene-1, the utility value of the mixed $C_4$ fraction will be much increased.

Generally, the presence of dienes or acetylenes

in the polymerization system in an amount exceeding a certain limit interferes with the polymerization activity of the highly active catalyst comprising a supported transition metal compound component on a solid carrier and an organo-metallic compound component, resulting in complete failure of the polymerization or considerably decreased yield of the copolymer. Accordingly, even if a polymer is obtained, the polymer quality will not attain to the level at which the deashing treatment becomes unnecessary.

The present inventors succeeded in obtaining a hydrogenated $C_4$ fraction containing neither dienes nor acetylenes or containing these in an amount exhibiting substantially no adverse effect on the polymerization, by subjecting the mixed $C_4$ fraction to hydrogenation which does not cause marked decrease in the n-butene-1 content. It was found that when this hydrogenated mixed $C_4$ fraction is used in the copolymerization with ethylene in the presence of a specific catalyst, it is possible to obtain a copolymer comprising ethylene and n-butene-1, in spite of the presence of a large amount of olefinic hydrocarbons such as isobutylene in said hydrogenated mixed $C_4$ fraction. The reproducibility of the polymerization reaction as well as that of the physical properties of the polymer were both satisfactory and the catalytic activity was so high that the deashing treatment of the polymer was unnecessary. This invention is based on these findings.

An object of this invention is to provide an improved process for copolymerizing ethylene and n-butene-1.

Other objects and advantages of this invention will become apparent from the following description.

This invention provides a process for producing a copolymer of ethylene and n-butene-1, which comprises using (a) ethylene as the first starting material and (b) as the second starting material a fraction prepared by selectively hydrogenating a mixed $C_4$ fraction so as to reduce the butadiene content to 200 ppm by volume or less and to maintain the n-butene-1 content of at least 70%, preferably at least about 80%, based on that contained in the mixed $C_4$ fraction, said mixed $C_4$ fraction containing 10% by weight or more of n-butene-1 and being obtained by extracting butadiene and the like from a $C_4$ fraction formed in hydrocarbon cracking, and polymerizing in the presence or absence of other inert hydrocarbons the ethylene and the n-butene-1 contained in said second starting material using a catalyst comprising a transition metal compound component supported on a solid carrier and a non-acidic or low-acidic organometallic compound component.

The mixed $C_4$ fraction, as herein referred to, is a $C_4$ hydrocarbon mixture containing n-butene-1 and, in general, small amounts of $C_3$ and $C_5$ hydrocarbons as well as dienes and acetylenes. Examples of dienes include 1,3-butadiene, 1,2-butadiene and propadienes. Examples of acetylenes include methylacetylene, ethylacetylene, vinylacetylene and dimethylacetylene. Examples of the mixed $C_4$ fractions are a spent BB fraction obtained by removing by extraction or other means 1,3-butadiene from a $C_4$ fraction formed in the hydrocarbon conversion at high temperatures such as naphtha cracking or butane cracking; and a fraction obtained by removing isobutylene from said spent BB fraction by the method of sulfuric acid extraction or of tert-butanol formation. A typical example of the composition of spent BB fraction is as shown in Table 1.

Table 1. Example of composition of spent BB fraction.

| Constituent | Wt.-% | Constituent | ppm (Vol.) |
|---|---|---|---|
| Propane | Trace | Propadiene | 5980 |
| Propylene | Trace | 1,3-Butadiene | 7500 |
| Isobutane | 3.2 | 1,2-Butadiene | 20 |
| n-Butane | 10.6 | Ethylacetylene | 70 |
| n-Butene-1 | 27.5 | Vinylacetylene | 730 |
| Isobutylene | 44.0 | | |
| trans-Butene-2 | 9.2 | | |
| cis-Butene-2 | 4.0 | | |

In order to be used as the second starting material in producing a copolymer according to this invention, the mixed $C_4$ fraction should be freed by hydrogenation from the dienes and acetylenes contained in minute amounts. It is necessary to carry out the hydrogenation so as to keep the resulting hydrogenated mixed $C_4$ fraction from a marked decrease in n-butene-1 content by preventing the isomerization of n-butene-1 to n-butene-2 and the hydrogenation of n-butene-1 which accompany with the hydrogenation of dienes and acetylenes. The hydrogenation becomes economically disadvantageous if the n-butene-1 content falls to less than 70% of the initial value. It is necessary, therefore, to employ a selective hydrogenation technique which removes dienes and acetylenes by hydrogenation without causing a decrease in the n-butene-1 content. It is carried out preferably in such a way as exemplified below.

In hydrogenating the mixed $C_4$ fraction in the liquid phase, the reaction is carried out by using a catalyst, which has been filled on a fixed bed, containing 0.01 to 1.0% by weight (based on a solid carrier) of palladium supported on a suitable solid carrier, with a space velocity of the mixed $C_4$ fraction necessary to decrease the dienes and acetylenes to intended concentrations under such conditions that the reaction temperature is 0° to 100°C and the molar ratio of hydrogen to the sum of

dienes and acetylenes is 1 to 10. The space velocity of mixed $C_4$ fraction is generally about 5 to about 200 $hour^{-1}$ in terms of liquid hourly space velosity (hereinafter referred to simply as "LHSV"), depending upon the diene content and the acetylene content and the reaction conditions. The carrier generally used for the hydrogenation catalyst is alumina, silica, activated carbon and diatomaceous earth. The selective hydrogenation can be carried out also in the gas phase or the gas-liquid mixed phase and can also be adapted for the batch operation.

In any case, in order to carry out effectively the present process, it is desirable to reduce the 1,3-butadiene content of the mixed $C_4$ fraction to 200 ppm or less, preferably 150 ppm or less by volume. If the 1,3-butadiene content is more than 200 ppm, the polymerization activity will not always attain a level sufficient to omit the deashing treatment of the polymer. When the 1,3-butadiene content is reduced to less than 200 ppm, the residual amounts of other dienes and acetylenes also decrease simultaneously to a level substantially harmless for the polymerization, because these compounds are more easily hydrogenated than 1,3-butadiene.

The diene content and acetylene content of the mixed $C_4$ fraction are not always constant and the fluctuation in the amounts of these compounds in the polymerization system presents a problem regarding the

reproducibility of polymerization. Such a trouble is completely eliminated by subjecting the mixed $C_4$ fraction to the selective hydrogenation.

It is also a surprising fact that the presence of large amounts of unsaturated hydrocarbons such as isobutylene and butene-2 in the hydrogenated mixed $C_4$ fraction does not deteriorate the polymerization activity and exhibits substantially no effect on the density, molecular weight and bulk density of the copolymer which is obtained.

In the commercial production of olefin polymers, an extremely high catalytic activity is of a great advantage, because it makes unnecessary the removal of catalyst residue from the polymer and, as a consequence, the manufacturing steps can be greatly simplified.

This invention provides a process for the industrially advantageous production of copolymers of ethylene and n-butene-1 at relatively low temperatures and pressures by using a highly active polymerization catalyst which makes unnecessary the deashing treatment of the polymer.

The catalyst used in the present process is a combination of a transition metal compound component supported on a solid carrier and a non-acidic or low-acidic organometallic compound component.

Suitable materials for use as the solid carrier are magnesium compounds such as halides,

oxyhalides, alkoxyhalides, oxides, hydroxides and carbonates and other materials including silica, alumina and silica-alumina. Of these compounds, magnesium halides are particularly preferred.

The transition metal compound components to be supported are, for example, halides, alkoxyhalides, alkoxides and oxyhalides of metals such as titanium, vanadium and chromium. Examples of particular compounds include titanium tetrachloride, titanium tetrabromide, titanium tetraiodide, titanium trichloride, titanium compounds represented by the general formula $Ti(OR)_{4-n}X_n$, vanadium tetrachloride, vanadium oxytrichloride, chromium chloride and chromyl chloride. Examples of the titanium compounds represented by the above general formula $Ti(OR)_{4-n}X_n$ (wherein R represents an alkyl, cycloalkyl, or phenyl group having up to 20 carbon atoms, X represents a halogen atom and n is a number defined by the formula $0 \leq n < 4$) include tetraethoxytitanium, ethoxytitanium trichloride, diethoxytitanium dichloride, triethoxytitanium chloride, propoxytitanium trichloride, butoxytitanium trichloride, phenoxytitanium trichloride, ethoxytitanium tribromide, dipropoxytitanium dibromide, and tributoxytitanium bromide. Of these compounds, titanium tetrachloride gives particularly desirable results.

Details of the transition metal compound component supported on the aforementioned solid carrier

are disclosed in Japanese Patent Application Kokai (Laid-open) No. 74,686/77; Belg. Patent No. 759,601; Japanese Patent Publication Nos. 13,050/68, 30,832/70, 40,295/70 and 46,269/72; French Patent No. 68-178,330; Japanese Patent Publication No. 26,383/72; and Japanese Patent Application Kokai (Laid-open) No. 14,349/74. Above all, the solid catalyst component described in Japanese Patent Application Kokai (Laid-open) No. 74,686/77 is particularly preferred in view of polymerization activity (in the slurry polymerization it forms most desirable slurry and yields a polymer of desirable powder properties). That is, the catalyst component disclosed in Japanese Patent Application Kokai (Laid-open) No. 74,686/77 is prepared by supporting a titanium compound and/or a vanadium compound on a solid product obtainable by reacting an organomagnesium compound with a halogenated aluminum compound represented by the following general formula:

$$R^1_nAlX_{3-n}$$

wherein $R^1$ is an alkyl, cycloalkyl, aryl or alkenyl group having up to 20 carbon atoms, X is a halogen atom and n is a number defined by $0 \leqq n < 3$ preferably 0, or with a halogenated silicon compound represented by the following general formula:

$$R^2_mSiX_{4-m}$$

wherein $R^2$ is an alkyl, cycloalkyl, aryl or alkenyl group having up to 20 carbon atoms, X is a halogen atom and m is a number defined by $0 \leqq m < 4$, preferably 0.

The organomagnesium compound used for the synthesis of catalyst may be selected from any forms of organomagnesium compounds obtainable by reacting an organic halogen compound with metallic magnesium.

As said organomagnesium compound, Grignard compounds represented by the following general formula:

$$R^3MgX$$

wherein $R^3$ is an alkyl, aryl or alkenyl group having up to 20 carbon atoms, and X is a halogen atom, or organomagnesium compounds represented by the following general formula:

$$R^3_2Mg$$

can be used preferably.

Said organomagnesium compound includes all the possible compositions expressed by the following equilibrium equation:

$$2R^3MgX \rightleftarrows R^3_2Mg + MgX_2 \rightleftarrows R^3_2Mg \cdot MgX_2$$

notwithsatnding whether or not said organomagnesium compound has been prepared in the presence of ether [W. Shlenk et al., Ber., 62, 920 (1929); ibid. 64, 739 (1931)].

Herein, $R^3$ represents an alkyl, aryl or alkenyl group having up to 20 carbon atoms, such as methyl, ethyl, n-propyl, isopropyl, n-butyl, sec-butyl, tert-butyl, n-amyl, iso-amyl, n-hexyl, n-octyl, 2-ethylhexyl, phenyl, benzyl and the like. Concrete examples of said organomagnesium compound, expressed in terms of Grignard compounds, include ethylmagnesium chloride, ethylmagnesium bromide, n-propylmagnesium chloride, n-butylmagnesium chloride, tert-butylmagnesium chloride, n-amylmagnesium chloride, phenylmagnesium bromide and the like.

Organomagnesium compounds represented by the general formula $R^3{}_2Mg$ are also included in the organomagnesium compounds of this invention, as indicated by the aforementioned equilibrium equation. Their concrete examples include diethylmagnesium, dipropylmagnesium, dibutylmagnesium, diamylmagnesium, dihexylmagnesium, dioctylmagnesium, diphenylmagnesium, dibenzylmagnesium and the like.

These organomagnesium compounds are synthesized and used in the presence of an ethereal solvent such as ethyl ether, propyl ether, butyl ether, amyl ether, tetrahydrofuran, dioxane and the like; hydrocarbon solvents such as hexane, heptane,

octane, cyclohexane, benzene, toluene, xylene and the like; or a mixture of an etheral solvent and a hydrocarbon solvent. Among these solvents, ethereal solvents are particularly preferable.

In the general formulas of the halogenated aluminum- or silicone-compound, $R^1$ and $R^2$ represent an alkyl, cycloalkyl, aryl or alkenyl group having up to 20 carbon atoms. Concrete examples of $R^1$ and $R^2$ include methyl, ethyl, n-propyl, iso-propyl, n-butyl, sec-butyl, tert-butyl, n-amyl, iso-amyl, n-hexyl, n-heptyl, n-octyl, vinyl, allyl, cyclopentyl, cyclohexyl, phenyl, benzyl and the like. X represents halogen atom, of which concrete examples include chlorine, bromine and iodine. Concrete examples of said halogenated aluminum compound include anhydrous aluminum chloride, aluminum bromide, aluminum iodide, diethylaluminum chloride, ethylaluminum dichloride, ethylaluminum sesquichloride, dibutylaluminum chloride, butylaluminum dichloride, dihexylaluminum bromide, hexylaluminum dibromide and the like. Concrete examples of said halogenated silicon compound include silicon tetrachloride, silicon tetrabromide, methylsilyl trichloride, dimethylsilyl dichloride, trimethylsilyl chloride, ethylsilyl trichloride, diethylsilyl dichloride, triethylsilyl chloride, propylsilyl tribromide, dipropylsilyl dibromide, tripropylsilyl bromide, dibutylsilyl dichloride, tributylsilyl chloride, vinylsilyl trichloride and the like.

The synthetic reactions of the catalyst are all carried out in an atmosphere of inert gas such as nitrogen, argon or the like. The reaction between the organomagnesium compound and the halogenated aluminum compound and/or halogenated silicon compound is preferably carried out in a solvent at a temperature of 0° - 100°C, though the reaction may be carried out at a high temperature of 100°C or above. The solvents usable in this reaction include aliphatic hydrocarbons such as pentane, hexane, heptane, octane and the like; aromatic hydrocarbons such as benzene, toluene, xylene and the like; alicyclic hydrocarbons such as cyclohexane, cyclopentane and the like; ethereal solvents such as ethyl ether, butyl ether, amyl ether, tetrahydrofuran, dioxane and the like; and mixtures of hydrocarbon solvents and ethereal solvents. Among these solvents, ethereal solvents are particularly preferable.

Said organomagnesium compound is reacted with said halogenated aluminum compound and/or said halogenated silicon compound in a proportion of 0.1 - 10.0 and preferably 0.5 - 2.0, by mole. The reaction product is precipitated in the form of a solid.

The reaction product obtained as above is isolated and then used as a carrier. Concretely speaking, the reaction product is used after being filtered, or subsequently thoroughly washed with a purified hydrocarbon diluent, or further dried. Then, the titanium compound and/or vanadium compound

described hereinbefore is supported on the carrier synthesized as above.

In supporting said titanium compound and/or vanadium compound on the carrier, one may adopt disclosed processes such as impregnation, kneading, co-precipitation and the like. A particularly superior process for this purpose comprises contacting said titanium compound and/or vanadium compound with said carrier in the absence of solvent or in the presence of appropriate inert solvent. Preferably, this supporting reaction is conducted at a temperature ranging from room temperature (about 20°C) to 150°C. After completion of the reaction, the reaction product is collected by filtration, thoroughly washed with a purified hydrocarbon diluent and then put to use directly, or put to use after an additional drying. The amount of said titanium compound and/or vanadium compound to be supported on the carrier is controlled so that the amount of titanium and/or vanadium atoms contained in the resulting solid product falls within the range of 0.1 - 30% by weight usually, and preferably in the range of 0.5 - 15% by weight. In this invention, a greater specific surface area of the solid catalyst component is more desirable. The solid catalyst component obtainable according to the above-mentioned process has a great specific surface area, which sometimes exceeds 200 $m^2/g$.

The non-acidic or low-acidic organometallic

compound components which form the catalyst system together with the aforementioned transition metal compound components in the polymerization system are those of the metals of Groups I to III of the periodic table. Preferred compounds are organoaluminum compounds represented by the general formula $AlR_mY_{3-m}$ (wherein R is a hydrocarbon group having up to 12 carbon atoms such as alkyl, cycloalkyl, alkenyl, or aromatic hydrocarbon group, Y is a halogen and m is a number defined by the formula $1.5 < m \leqq 3$, preferably $2 \leqq m \leqq 3$) and organozinc compounds represented by the general formula $ZnR_2$ (wherein R is as defined above). Typical examples of the preferable compounds include trialkylaluminums such as triethylaluminum, tri-n-propylaluminum, tri-n-butylaluminum, and tri-n-hexylaluminum; dialkylaluminum monohalides such as diethylaluminum monochloride, di-n-propylaluminum monochloride, di-n-butylaluminum monochloride, and di-n-hexylaluminum monochloride; and dialkylzincs such as diethylzinc. Of these compounds, most preferred are trialkylaluminums, especially triethylaluminum.

The amount of an organometallic compound to be used in the polymerization is not specifically limited, but the ratio of the organometallic compound to the transition metal compound is in the range of generally from 1 to 1,000, preferably from 5 to 500 in terms of metal atom.

The employment of these organometallic compounds

permits steady progress of the polymerization, suppression of the unnecessary side reactions with substituents in a mixed $C_4$ fraction, and easy discharge of the copolymer after termination of the polymerization.

Organometallic compounds such as alkylaluminum dihalides and alkylaluminum sesquihalides, which are neither non-acidic nor low-acidic, are undesirable, because if they are used, the cationic polymerization of isobutylene or n-butene-2 tends to occur simultaneously or the catalytic activity is not sufficiently high to dispense with the deashing treatment.

According to this invention, it is possible to produce with a high catalytic efficiency a copolymer of ethylene and n-butene-1 as major constituent units, which contains so little catalyst residue that the product quality is substantially unaffected and, as a consequence, the step of removing the catalyst residue can be omitted.

In the process of this invention, in addition to the second starting material, i.e. the selectively hydrogenated mixed $C_4$ fraction, a small quantity of another α-olefin can be used as the third starting material. Such α-olefins include, for example, propylene, pentene-1, hexene-1, 4-methylpentene-1 and octene-1.

The present process can be carried out by the technique of slurry polymerization in the presence

of the hydrogenated mixed $C_4$ fraction or other inert hydrocarbons or by the technique of solution polymerization or gas phase polymerization. The polymerization temperature is generally in the range of from 20° to 200°C, preferably from 30° to 110°C and the polymerization pressure is in the range of preferably from about 5 to about 100 atmospheres, though the polymerization can be carried out under higher temperature and pressure conditions.

The inert hydrocarbons for use in the polymerization as a diluent solvent for the hydrogenated mixed $C_4$ fraction include aliphatic hydrocarbons such as butane, pentane, hexane and heptane; cycloaliphatic hydrocarbons such as cyclohexane and cycloheptane; and aromatic hydrocarbons such as benzene, toluene and xylene.

Particularly when the ethylene copolymerization is operated, under applied pressure, by the technique of slurry polymerization in a liquified hydrogenated mixed $C_4$ fraction or a polymerization system containing butane as diluent, the polymer can be separated simply by the flashing treatment. This is an important advantage of the process. Another advantage of such slurry polymerization according to this invention is that even in the case of producing a low-density copolymer having an increased proportion of n-butene-1, the polymer contains only a small portion which is soluble in the liquid phase so that the

polymerization proceeds in an excellent slurry condition and there is observable neither a viscosity increase in the polymerization system due to the formation of a low-molecular product nor the formation of a sticky polymer cake.

The invention is illustrated below in further detail with reference to Examples, but the invention is not limited thereto.

Example 1

(1) Preparation of hydrogenated spent BB fraction.

The spent BB fraction shown in Table 2, which had been derived from naphtha cracking, was selectively hydrogenated under the following conditions using a commercial catalyst of palladium supported on γ-alumina in a concentration of 0.1%, and a hydrogenated spent BB fraction shown in Table 3 was obtained.

Reaction conditions: Molar ratio of hydrogen to the sum of dienes and acetylenes in the spent BB fraction: 2.3; LHSV of the spent BB fraction: 90/hour; temperature of the reactor jacket: 25°C; reaction pressure: 20 kg/cm$^2$.

Table 2

| Constituent | Wt.-% | Constituent | ppm (Vol.) |
|---|---|---|---|
| Isobutane | 4.28 | Propadiene | 3890 |
| n-Butane | 14.50 | 1,3-Butadiene | 11230 |
| n-Butene-1 | 25.39 | 1,2-Butadiene | 233 |
| Isobutylene | 42.03 | Methylacetylene | 93 |
| trans-Butene-2 | 8.54 | Ethylacetylene | 295 |
| cis-Butene-2 | 8.94 | Vinylacetylene | 1630 |

Table 3

| Constituent | Wt.-% | Constituent | ppm (Vol.) |
|---|---|---|---|
| Isobutane | 4.65 | Propadiene | 0 |
| n-Butane | 16.02 | 1,3-Butadiene | 128 |
| n-Butene-1 | 21.42 | 1,2-Butadiene | 0 |
| Isobutylene | 41.35 | Methylacetylene | 0 |
| trans-Butene-2 | 10.77 | Ethylacetylene | 0 |
| cis-Butene-2 | 5.57 | Vinylacetylene | 0 |

(2) Preparation of polymerization catalyst.

Into a 500-ml four-necked flask provided with a stirrer, reflux condenser and dropping funnel, was charged 16.0 g of magnesium turnings of the Grignard reagent grade. After complete removal of the air and moisture from the flask by flushing thoroughly with nitrogen, 68 ml (0.65 mole) of n-butyl chloride and

300 ml of n-butyl ether were charged into the dropping funnel and about 30 ml of the mixture was added dropwise to the magnesium in the flask to initiate the reaction. Thereafter, the remaining mixture was added dropwise over a period of 4 hours at 50°C. After completion of the addition, the reaction was continued for further 1.5 hours at 60°C. The reaction solution was allowed to cool down to room temperature and the solid matter was removed by filtration through a glass filter. Upon analysis the concentration of the resulting Grignard reagent was found to be 1.96 moles/liter.

A 250-ml four-necked flask provided with a stirrer, dropping funnel and thermometer was thoroughly flushed with nitrogen to remove the air and moisture. To 130 ml (0.26 mole) of the solution of n-butylmagnesium in n-butyl ether obtained above, was added dropwise over a period of 2 hours at 50°C 30 ml (0.26 mole) of silicon tetrachloride from the dropping funnel. The reaction was allowed to continue for further one hour at 60°C. The white solid formed was separated, washed with n-heptane and dried under reduced pressure to obtain 31.5 g of a white solid. A 10 g portion of the white solid was placed in a 100-ml four-necked flask, then covered with 50 ml of titanium tetrachloride and stirred for one hour at 100°C to allow the reaction to proceed. After completion of the reaction, the solid product was

repeatedly washed with n-heptane until no more titanium tetrachloride was detected in the washings, and dried under reduced pressure to obain 7.9 g of a solid catalyst component containing 19 mg/g of supported titanium.

(3) Polymerization.

Into a 5-liter stainless steel autoclave provided with an electromagnetic stirrer, which had been thoroughly flushed with dry nitrogen, was charged 1,250 g of the hydrogenated spent BB fraction which had been prepared in (1) and dried with Molecular Sieve. After adding 10 mmoles of triethylaluminum and heating to 50°C, hydrogen was introduced to a partial pressure of 7 $kg/cm^2$ followed by ethylene to a partial pressure of 10 $kg/cm^2$. The polymerization was initiated by adding under applied pressure 14.4 mg of the solid catalyst component prepared in (2) and 20 ml of n-heptane. The polymerization was allowed to continue at 50°C for 2 hours while replenishing with ethylene to keep the total pressure constant. The polymerization was terminated with isopropyl alcohol and the hydrogen, unreacted ethylene and hydrogenated spent BB fraction were purged. There were obtained 620 g of an ethylene copolymer having a density of 0.930, a melt index of 4.3 g/10 minutes, and a bulk density of 0.43 $g/cm^3$. The catalytic activity was 2,150 g copolymer/g solid catalyst·hour·ethylene pressure or 113,000 g copolymer/g Ti·hour·

ethylene pressure.

Comparative Example 1

The spent BB fraction derived from naphtha cracking described in (1) of Example 1 was dehydrated with Molecular Sieve and used as such, i.e. without being hydrogenated. The polymerization procedure of Example 1 (3) was followed, except that 41.3 mg of the solid catalyst component was used. Entirely no polymerization took place.

Comparative Example 2

Into a 5-liter stainless steel autoclave provided with an electromagnetic stirrer, which had been thoroughly flushed with dry nitrogen, were charged 268 g of n-butene-1 (a product of Dainippon Ink Co.) and 982 g of butane. After adding 10 mmoles of triethylaluminum and heating to 50°C, hydrogen was introduced to a partial pressure of 7 $kg/cm^2$ followed by ethylene to a partial pressure of 10 $kg/cm^2$. The polymerization was initiated by adding under applied pressure 18.7 mg of the solid catalyst component prepared in Example 1 (2) and 20 ml of n-heptane. The polymerization was allowed to continue at 50°C for 2 hours while replenishing with ethylene to keep the total pressure constant. The polymerization was terminated with isopropyl alcohol and the hydrogen, unreacted ethylene, n-butene-1, and butane were purged. There were obtained

741 g of an ethylene copolymer having a density of 0.930, a melt index of 4.0 g/10 minutes, and a bulk density of 0.43 g/cm3. The catalytic activity was 1,980 g copolymer/g solid catalyst·hour·ethylene pressure or 104,000 g copolymer/g Ti·hour·ethylene pressure.

Example 2

(1) Preparation of hydrogenated spent BB fraction.

A spent BB fraction of the composition as shown in Table 4, which had been derived from cracked naphtha, was selectively hydrogenated under the following reaction conditions using a commercial catalyst in which 0.05% of palladium was supported on γ-alumina. A hydrogenated spent BB fraction of the composition as shown in Table 5 was obtained.

Reaction conditions: Molar ratio of hydrogen to the sum of dienes and acetylenes in the spent BB fraction: 2.6; LHSV of the spent BB fraction: 48/hour; temperature of the reactor jacket: 40°C; reaction pressure: 20 kg/$cm^2$.

Table 4

| Constituent | wt.-% | Constituent | ppm (Vol.) |
|---|---|---|---|
| Isobutane | 2.27 | Propadiene | 4,010 |
| n-Butane | 9.45 | 1,3-Butadiene | 8,640 |
| n-Butene-1 | 25.85 | 1,2-Butadiene | 325 |
| Isobutylene | 47.83 | Methylacetylene | 108 |
| trans-Butene-2 | 9.24 | Ethylacetylene | 341 |
| cis-Butene-2 | 4.42 | Vinylacetylene | 1,920 |

Table 5

| Constituent | wt.-% | Constituent | ppm (Vol.) |
|---|---|---|---|
| Isobutane | 2.64 | Propadiene | 0 |
| n-Butane | 11.27 | 1,3-Butadiene | 3 |
| n-Butene-1 | 20.41 | 1,2-Butadiene | 0 |
| Isobutylene | 47.08 | Methylacetylene | 0 |
| trans-Butene-2 | 11.78 | Ethylacetylene | 0 |
| cis-Butene-2 | 6.64 | Vinylacetylene | 0 |

(2) Polymerization.

Into a 5-liter stainless steel autoclave provided with an electromagnetic stirrer, which had been thoroughly flushed with dry nitrogen, was charged 1,250 g of the hydrogenated spent BB fraction prepared in (1). After adding 10 mmoles of triethylaluminum

and heating to 60°C, hydrogen was introduced to a partial pressure of 2.5 $kg/cm^2$ followed by ethylene to a partial pressure of 7 $kg/cm^2$. The polymerization was initiated by adding under applied pressure 13.3 mg of the solid catalyst component prepared in Example 1 (2) and 20 ml of n-heptane. The polymerization was allowed to continue at 60°C for further 2 hours while replenishing with ethylene to keep the total pressure constant. The polymerization was terminated with isopropyl alcohol and the hydrogen, unreacted ethylene and hydrogenated spent BB fraction were purged. There were obtained 684 g of an ethylene copolymer having a density of 0.920, a melt index of 0.52 g/10 minutes, and a bulk density of 0.38 $g/cm^3$. The catalytic activity was 2,570 g copolymer/g solid catalyst·hour·ethylene pressure or 135,000 g copolymer/g Ti·hour·ethylene pressure.

Example 3

Into a 5-liter stainless steel autoclave provided with an electromagnetic stirrer, which had been thoroughly flushed with dry nitrogen, were charged 2.5 liters of n-heptane and 10 mmoles of triethylaluminum followed by 40 g of the hydrogenated spent BB fraction prepared in Example 2 (1), which had been dehydrated with Molecular Sieve. After heating to 70°C, hydrogen was introduced to a partial pressure of 5 $kg/cm^2$ followed by ethylene to a partial pressure of 10 $kg/cm^2$.

The polymerization was initiated by adding under applied pressure 16.8 mg of the solid catalyst component prepared in Example 1 (2) together with 20 ml of n-heptane. The polymerization was allowed to continue for further 2 hours at 70°C while replenishing with ethylene to keep the total pressure constant. The polymerization was terminated with isopropyl alcohol and the autoclave was purged to atmospheric pressure. The polymerization mixture was filtered through a glass filter to obtain 582 g of an ethylene copolymer having a density of 0.953, a melt index of 0.41 g/10 minutes, and a bulk density of 0.35 g/cm$^3$. The catalytic activity was 1,780 g copolymer/g solid catalyst·hour·ethylene pressure or 91,000 g copolymer/g Ti·hour·ethylene pressure.

Example 4

(1) Preparation of hydrogenated spent BB fraction.

A spent BB fraction of the composition as shown in Table 6, which had been derived from cracked naphtha, was selectively hydrogenated under the following conditions using a commercial catalyst in which 0.5% palladium was supported on γ-alumina. A hydrogenated spent BB fraction of the composition as shown in Table 7 was obtained.

Reaction conditions: Molar ratio of hydrogen to the sum of dienes and acetylenes: 2.5; LHSV of the spent BB fraction: 100/hour; temperature of the reactor

jacket: 24°C; reaction pressure: 15 $kg/cm^2$.

Table 6

| Constituent | wt.-% | Constituent | ppm (Vol.) |
|---|---|---|---|
| Isobutane | 3.31 | Propadiene | 5,980 |
| n-Butane | 10.65 | 1,3-Butadiene | 7,530 |
| n-Butene-1 | 27.72 | 1,2-Butadiene | 15 |
| Isobutylene | 44.01 | Methylacetylene | 0 |
| trans-Butene-2 | 9.26 | Ethylacetylene | 71 |
| cis-Butene-2 | 4.09 | Vinylacetylene | 730 |

Table 7

| Constituent | wt.-% | Constitudent | ppm (Vol.) |
|---|---|---|---|
| Isobutane | 3.82 | Propadiene | 20 |
| n-Butane | 11.67 | 1,3-Butadiene | 60 |
| n-Butene-1 | 23.50 | 1,2-Butadiene | 0 |
| Isobutylene | 43.06 | Methylacetylene | 0 |
| trans-Butene-2 | 11.41 | Ethylacetylene | 0 |
| cis-Butene-2 | 6.34 | Vinylacetylene | 0 |

(2) Polymerization.

Into a 5-liter stainless steel autoclave provided with an electromagnetic stirrer, which had been thoroughly flushed with dry nitrogen, was charged

10 mmoles of triethylaluminum followed by 100 g of the hydrogenated spent BB fraction prepared in (1), which had been dehydrated with Molecular Sieve, 1,150 g of butane and 5 g of propylene. After heating to 70°C, hydrogen was introduced to a partial pressure of 8 $kg/cm^2$ followed by ethylene to partial pressure of 10 $kg/cm^2$. The polymerization was initiated by adding under applied pressure 23.6 mg of the solid catalyst component prepared in Example 1 (2) together with 20 ml of n-heptane. The polymerization was allowed to continue at 70°C for further 2 hours while replenishing with ethylene to keep the total pressure constant. The polymerization was terminated with isopropyl alcohol and the unreacted monomers and the solvent were purged. There were obtained 728 g of an ethylene copolymer having a density of 0.947, a melt index of 4.1 g/10 minutes, and a bulk density of 0.39 $g/cm^3$. The catalytic activity was 1,540 g copolymer/g solid catalyst·hour·ethylene pressure or 81,000 g copolymer/g Ti·hour·ethylene pressure.

WHAT IS CLAIMED IS:

1. In a process for copolymerizing ethylene with n-butene-1 with a catalyst comprising (A) a transition metal compound component supported on a solid carrier and (B) an organometallic compound component of a metal of Groups I to III of the periodic table, the improvement which comprises selectively hydrogenating a mixed $C_4$ fraction containing 10% by weight or more of n-butene-1 which remains after the extraction of 1,3-butadiene from a $C_4$ fraction of cracked hydrocarbons so that the resulting hydrogenated fraction contains 200 ppm by volume or less of 1,3-butadiene and n-butene-1 in an amount of at least 70% based on the amount of n-butene-1 contained in the mixed $C_4$ fraction, using this hydrogenated fraction as the source of n-butene-1 in the copolymerization, and using as said organometallic compound component a non-acidic or low-acidic organometallic compound.

2. A process according to Claim 1, wherein the non-acidic or low-acidic organometallic compound is a compound represented by the formula $AlR_mX_{3-m}$, wherein R is a hydrocarbon group having 1 to 12 carbon atoms, X is a halogen, and m is a number defined by the formula $1.5 < m \leqq 3$, or by the formula $ZnR_2$, wherein R is as defined above.

3. A process according to Claim 2, wherein the non-acidic or low-acidic organometallic compound is a compound represented by the formula $AlR_mX_{3-m}$, wherein R and X are as defined above and m is a number defined

by the formula $2 \leq m \leq 3$.

4. A process according to Claim 3, wherein the non-acidic or low-acidic organometallic compound is trialkylaluminums, dialkylaluminum monohalides or dialkyl zincs.

5. A process according to Claim 1, wherein the resulting hydrogenated fraction contains n-butene-1 in an amount of at least 80 % based on the amount of n-butene-1 contained in the mixed $C_4$ fraction.

6. A process according to Claim 1, wherein the mixed $C_4$ fraction is that from which isobutylene has been removed.

7. A process according to Claim 1 or 7, wherein the mixed $C_4$ fraction is selectively hydrogenated using a palladium catalyst under such conditions that the reaction temperature is 0° to 100°C, the molar ratio of hydrogen to the sum of dienes and acetylenes in said fraction is 1 to 10, and the liquid hourly space velocity of the mixed $C_4$ fraction is 5 to 200 $hour^{-1}$.

8. A process according to Claim 1, wherein the transition metal compound component is halides, alkoxyhalides, alkoxides or oxyhalides of titanium, vanadium or chromium.

9. A process according to Claim 9, wherein the transition metal compound component is titanium tetrachloride.

10. A process according to Claim 1, wherein the ratio of the organometallic compound to the transition metal compound is in the range of from 1 to 1,000 in terms of metal atom.